(19) Europäisches Patentamt / European Patent Office / Office européen des brevets

(11) **EP 2 819 465 A1**

(12) **EUROPEAN PATENT APPLICATION**

(43) Date of publication:
**31.12.2014 Bulletin 2015/01**

(51) Int Cl.:
*H04W 52/24* (2009.01)   *H04W 16/02* (2009.01)
*H04W 16/16* (2009.01)

(21) Application number: **13305905.5**

(22) Date of filing: **27.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Boccardi, Federico**
  **20059 VIMERCATE, MI (IT)**
• **Hoydis, Jakob Richard**
  **70435 STUTTGART (DE)**
• **Weber, Andreas**
  **70435 Stuttgart (DE)**

(74) Representative: **Hofmann, Dirk**
  **Alcatel-Lucent Deutschland AG**
  **Intellectual Property Business Group**
  **Lorenzstrasse 10**
  **70435 Stuttgart (DE)**

(54) **Method for operating a base station in a heterogeneous radio access network and base station thereof and method for operating a mobile station in a heterogeneous radio access network and mobile station thereof**

(57) The embodiments of the invention relate to a method for operating a base station (BS1) in a heterogeneous radio access network (H-RAN). The heterogeneous radio access network (H-RAN) contains a network node group (NG) of a macro base station (BS1), at least one first mobile station (MS1) connected to the macro base station (BS1), a micro base station (BS2) located within a coverage area (CA-BS1) of the macro base station (BS1) and at least one second mobile station (MS2) connected to the micro base station (BS1). The method contains transmitting from the base station (BS1) of the network node group (NNG) to a mobile station (MS, MS1) of the network node group (NNG) first downlink radio frequency signals (D-RFS1) of a first frequency range (FR1), when a further mobile station (MS, MS2) of the network node group (NNG) provides a transmission of first uplink radio frequency signal (U-RFS1) of the first frequency range (FR1) to a further base station (BS, BS2) of the network node group (NNG), and receiving at the base station (BS1) from the mobile station (MS1) second uplink radio frequency signal of a second frequency range (FR2), when the further base station (BS2) provides to the further mobile station (MS2) a transmission of second downlink radio frequency signal of the second frequency range (FR2). The method further contains determining at the base station (BS1) at least one transmission parameter for a further transmission of the first downlink radio frequency signals (D-RFS1) based on an interference of the second downlink radio frequency signals for adapting the further transmission of the first downlink radio frequency signals (D-RFS1) and for reducing interference of the first downlink radio frequency signals (D-RFS1) at a location of the further base station (BS2). The embodiments of the invention further relate to a method for operating a mobile station (MS1) in the heterogeneous radio access network (H-RAN), to a base station (BS1) for operating in the heterogeneous radio access network (H-RAN) and to a mobile station (MS1) for operating in the heterogeneous radio access network (H-RAN).

FIG. 1

## Description

### FIELD OF THE INVENTION

Embodiments of the invention relate to interference reduction in a radio communication system and, more particularly but not exclusively, to interference reduction in a heterogeneous radio access network with an arrangement of one small cell or several small radio cells inside a coverage area of a large radio cell.

### BACKGROUND

Deployment and use of mobile devices like smartphones and tablets has increased exponentially in the last few years and these devices have contributed to an explosion of wireless data traffic. It is expected that the number of mobile devices and accordingly the amount of wireless data traffic will increase further in the coming years. HetNets (HetNet = heterogeneous network) offer a potential solution to handle the explosion of the wireless data traffic.

A HetNet contains macro cells of a classical cellular network such as GSM/GPRS (GSM = Global System for Mobile Communication, GPRS = General Packet Radio Service), UMTS (UMTS = Universal Mobile Telecommunication Systems) or LTE (LTE = Long Term Evolution). Each macro cell provides full coverage for a area with a diameter in a range of several hundred meters up to several kilometers. The HetNet further contains small cells such as femto cells or pico cells with diameters in range of several ten meters up to one hundred or two hundred meters. The small cells are usually located inside a coverage area of a macro cell. Preferably, the small cells are arranged in certain areas with high traffic demand, e.g. a hotspot like a train station, a football stadium etc.

When such HetNets are operated in an FDD transmission mode (FDD = Frequency Division Duplex), interference reduction can be achieved by a combination of power control, ICIC (ICIC = Inter-Cell Interference-Coordination), and ABS (ABS = Almost Blank Subframe).

ICIC is based on a coordinated resource management by fixed, adaptive or real-time coordination of radio resources between neighboring base stations using an inter-cell signaling mechanism.

The ABS is generated by a special transmission technique, which is applied by the macro cell. Thereby, some radio resources of an overall number of radio resources of a downlink of the macro cell are selected and predefined for a limited transmission of downlink radio frequency signals. In 3GPP LTE (3GPP = Third Generation Partnership Project, LTE = Long Term Evolution) for example only common reference signals, synchronization information and broadcast information and no user specific traffic such as data information or control information are transmitted by predefined sub-frames, i.e. the ABS. When the macro cell transmits an ABS, the small cell is able to transmit user data and signal data to the mobile stations, which are connected to the small cell. Thereby, an interference of the macro cell transmission on a reception of radio frequency signals being transmitted from the small cell to the mobile stations, which are attached to the small cell, is reduced.

Especially the synchronization and broadcast channels of the small cell suffer from interference caused by the same type of channels generated by the surrounding macro cell. Also the small cell's PDCCH (PDCCH = Physical Downlink Control Channel) is interfered strongly by the PDCCH of the macro cell. This is especially true in case of using only one OFDM symbol for the PDCCH, as this first OFDM symbol is in parallel used for CRS (CRS = common reference signal).

The residual interference, which is generated by the CRS, the synchronization information and the broadcast information during a transmission time of an ABS, can be suppressed by enhanced receivers, which are needed at the mobile station. Such enhanced receivers are even more required, when significant range extension is applied within the heterogeneous network. The range extension allows the mobile stations to be connected a longer time with a small cell even if a transmission quality for a connection between a macro cell and the mobile station would be higher than for the current connection between the small cell and the mobile station.

Frequency ICIC suffers from a so-called PDCCH interference, because the PDCCH is spread over the whole bandwidth of a downlink from a base station to mobile stations, which are in a coverage area of the base station. But even if this is avoided in future releases of the 3GPP standard, frequency ICIC is not very flexible, requires more complex schedulers, and a co-ordination between the base stations.

A so-called carrier aggregation may be applied for achieving a better performance of the frequency ICIC. However, multiple paired sub-carriers are required for such a solution and therefore, the sub-carriers cannot be flexibly allocated in a same manner as without the carrier aggregation mechanism.

### SUMMARY

Interference reduction is essential for being able to increase the wireless data traffic and to improve user perception in heterogeneous networks. Thus, objects of the embodiments of the invention are improving an interference reduction, increasing system capacity and improving user perception especially in heterogeneous networks.

The object is achieved by a method for operating a base station in a heterogeneous radio access network. The heterogeneous radio access network contains a network node group. The network node group contains a macro base station, at least one first mobile station connected to the macro base station, a micro base station located within a coverage area of the macro base station and at least one second mobile station connected to the micro base station. The method contains a step of transmitting from the base station of the network node group to a mobile station of the network node group first downlink radio frequency signals of a first frequency range, when a further mobile station of the network node group provides a transmission of first uplink radio frequency signal of the first frequency range to a further base station of the network node group, and of receiving at the base station from the mobile station second uplink radio frequency signal of a second frequency range, when the further base station provides to the further mobile station a transmission of second downlink radio frequency signal of the second frequency range. The method further contains the step of determining at the base station at least one transmission parameter for a further transmission of the first downlink radio frequency signals based on or as a function of an interference of the second downlink radio frequency signals for adapting the further transmission of the first downlink radio frequency signals and for reducing interference of the first downlink radio frequency signals at a location of the further base station.

The object is further achieved by a method for operating a mobile station in a heterogeneous radio access network, which contains the above mentioned network node group. The method contains the step of transmitting from the mobile station of the network node group to a base station of the network node group second uplink radio frequency signals of a second frequency range, when a further base station of the network node group provides a transmission of second downlink radio frequency signal of the second frequency range to a further mobile station of the network node group, and of receiving at the mobile station from the base station first downlink radio frequency signal of a first frequency range, when the further mobile station provides to the further base station a transmission of first uplink radio frequency signal of the first frequency range. The method further contains the step of determining at the mobile station at least one transmission parameter for a further transmission of the second uplink radio frequency signals based on or as a function of an interference of the first uplink radio frequency signals for adapting the further transmission of the second uplink radio frequency signals and for reducing interference of the second uplink radio frequency signals at a location of the further mobile station.

The object is further achieved by a base station for operating in a heterogeneous radio access network, which contains the above mentioned network node group. The base station contains means for transmitting from the base station of the network node group to a mobile station of the network node group first downlink radio frequency signals of a first frequency range, when a further mobile station of the network node group provides a transmission of first uplink radio frequency signal of the first frequency range to a further base station of the network node group, and for receiving at the base station from the mobile station second uplink radio frequency signals of a second frequency range, when the further base station provides to the further mobile station a transmission of second downlink radio frequency signal of the second frequency range. The base station further contains means for determining at least one transmission parameter for a further transmission of the first downlink radio frequency signals based on or as a function of an interference of the second downlink radio frequency signals for adapting the further transmission of the first downlink radio frequency signals and for reducing interference of the first downlink radio frequency signals at a location of the further base station.

In embodiments, the means for transmitting the first downlink radio frequency signals and for receiving the second uplink radio frequency signals may correspond to any transceiver unit or any combination of at least one transmitter unit and at least one receiver unit, etc. Hence, in embodiments the means for transmitting may contain an input for first downlink user data and/or first downlink signaling data, may contain a radio signal generation unit with sub-units such as coding unit, modulation unit and amplification unit for generating the first downlink radio frequency signals containing the first downlink user data and/or the first downlink signaling data, and may contain an output for the first downlink radio frequency signals containing the first downlink user data and/or the first downlink signaling data. Hence, in embodiments, the means for receiving the second uplink radio frequency signals may contain an input for the second uplink radio frequency signals and the interfering second downlink radio frequency signals, may contain an algorithm for separating the second uplink radio frequency signals from the interfering second downlink radio frequency signals and for extracting second uplink user data and/or second uplink signaling data from the second uplink radio frequency signals and may contain an output for the second uplink user data and/or the second uplink signaling data. In some embodiments the means for transmitting the first downlink radio frequency signals and for receiving the second uplink radio frequency signals can be implemented partly in terms of a computer program and a hardware component on which the computer program is executed, such as a DSP (DSP = Digital Signal Processor), an ASIC (ASIC = Application-Specific Integrated Circuit), an FPGA (FPGA = Field-Programmable Gate Array) or any other processor.

In embodiments, the means for determining may correspond to any determining unit or determination unit, which determines at least one transmission parameter for the further transmission of the first downlink radio frequency signals based on or as a function of an interference of the second downlink radio frequency signals received by the base station, for adapting the further transmission of the first downlink radio frequency signals and for avoiding interference of the first downlink radio frequency signals at a location of the further base station. Hence, in embodiments, the means for determining may contain an input for the interfering second downlink radio frequency signals, may contain an algorithm, which determines the at least one transmission parameter and may contain an output for the at least one transmission parameter. In some embodiments the means for determining can be implemented in terms of a computer program and a hardware component on which the computer program is executed, such as a DSP, an ASIC, an FPGA or any other processor.

The object is further achieved by a mobile station for operating in a heterogeneous radio access network, which contains the above mentioned network node group. The mobile station contains means for transmitting from the mobile station of the network node group to a base station of the network node group second uplink radio frequency signals of a second frequency range, when a further base station of the network node group provides a transmission of second downlink radio frequency signal of the second frequency range to a further mobile station of the network node group, and for receiving at the mobile station from the base station first downlink radio frequency signals of a first frequency range, when the further mobile station provides to the further base station a transmission of first uplink radio frequency signals of the first frequency range. The mobile station further contains means for determining at least one transmission parameter for a further transmission of the second uplink radio frequency signals based on or as a function of an interference of the first uplink radio frequency signals for adapting the further transmission of the second uplink radio frequency signals and for reducing interference of the second uplink radio frequency signals at a location of the further mobile station.

In embodiments, the means for transmitting the second uplink radio frequency signals and for receiving the first downlink radio frequency signals may correspond to any transceiver unit or any combination of at least one transmitter unit and at least one receiver unit, etc. Hence, in embodiments the means for transmitting may contain an input for second uplink user data and/or second uplink signaling data, may contain a radio signal generation unit with sub-units such as coding unit, modulation unit and amplification unit for generating the second uplink radio frequency signals containing the second uplink user data and/or the second uplink signaling data, and may contain an output for the second uplink radio frequency signals containing the second uplink user data and/or the second uplink signaling data. Hence, in embodiments, the means for receiving the first downlink radio frequency signals may contain an input for the first downlink radio frequency signals and the interfering first uplink radio frequency signals, may contain an algorithm for separating the first downlink radio frequency signals from the interfering first uplink radio frequency signals and for extracting first downlink user data and/or first downlink signaling data from the first downlink radio frequency signals and may contain an output for the first downlink user data and/or the first downlink signaling data. In some embodiments the means for transmitting the first downlink radio frequency signals and for receiving the second uplink radio frequency signals can be implemented partly in terms of a computer program and a hardware component on which the computer program is executed, such as a DSP, an ASIC, an FPGA or any other processor.

In embodiments, the means for determining may correspond to any determining unit or determination unit, which determines at least one transmission parameter for the further transmission of the first downlink radio frequency signals based on or as a function of an interference of the second downlink radio frequency signals received by the base station, for adapting the further transmission of the first downlink radio frequency signals and for avoiding interference of the first downlink radio frequency signals at a location of the further base station. Hence, in embodiments, the means for determining may contain an input for the interfering second downlink radio frequency signals, may contain an algorithm, which determines the at least one transmission parameter and may contain an output for the at least one transmission parameter. In some embodiments the means for determining can be implemented in terms of a computer program and a hardware component on which the computer program is executed, such as a DSP, an ASIC, an FPGA or any other processor.

The macro base station, the micro base station, the at least one first mobile station and the at least one second mobile station operate with a so-called reversed FDD operation mode with respect to an applied frequency range. This means with respect to the first frequency range that the macro base station is transmitting in downlink and the micro base station is receiving in uplink and with respect to the second frequency range the macro base station is receiving in uplink and the micro base station is transmitting in downlink.

The transmissions with respect to the first frequency range and the second frequency range may be executed simultaneously or at least may partly overlap in time.

The micro base station may be for example a so-called femto base station or a so-called pico base station.

The reversed FDD operation provides an advantage of reducing interference in a heterogeneous radio access network, which contains such an arrangement of the macro base station, the micro base station, the at least one first mobile station and the at least one second mobile station. Especially in dense HetNet deployments with many network node groups consisting of one macro base station and at least one micro base station interference between communication connections managed by the macro base station and further communication connections managed by the micro base stations may be reduced Thereby, an overall data rate and the system capacity may be increased for a same number of available radio resources. Furthermore, the reversed FDD operation mode provides less impact on radio resource management at the base stations and less requirements for inter-base station signalling.

All embodiments being described in the following within the summary section may be performed or executed by the base station being the macro base station or the micro base station or may be performed or executed by the mobile station being the at least one first mobile station or the at least one second mobile station. For simplification the description will be given only with respect to an interference reduction at the further base station being the micro base station by adapting a transmission at the base station being the macro base station. In a same way, an interference reduction at the macro base station by adapting a transmission at the micro base station being the base station, an interference reduction at the at least one second mobile station by adapting a transmission at the at least one first mobile station being the mobile station and an interference reduction at the at least one first mobile station by adapting a transmission at the at least one second mobile station being the mobile station may be obtained.

According to a further preferred embodiment, the determining step may contain the sub-step of determining at least one interference parameter of the interference of the second downlink radio frequency signals received by the base station. The determining step may contain a further sub-step of determining the at least one transmission parameter based on or as a function of the at least one interference parameter. Accordingly, the base station may contain means for determining the at least one interference parameter and means for determining the at least one transmission parameter.

In embodiments, the means for determining the at least one interference parameter may correspond to any determining unit or determination unit, which determines the at least one interference parameter of the interference of the second downlink radio frequency signal at the location of the base station. Hence, in embodiments, the means for determining the at least one interference parameter may contain an input for the interfering second downlink radio frequency signals, may contain an algorithm, which determines the at least one interference parameter and may contain an output for the at least one interference parameter. In some embodiments the means for determining the at least one interference parameter can be implemented in terms of a computer program and a hardware component on which the computer program is executed, such as a DSP, an ASIC, an FPGA or any other processor.

In embodiments, the means for determining the at least one transmission parameter may correspond to any determining unit or determination unit, which determines the at least one transmission parameter based on or as a function of the at least one interference parameter. Hence, in embodiments, the means for determining the at least one transmission parameter may contain an input for the at least one interference parameter, may contain an algorithm, which determines the at least one transmission parameter based on or as a function of the at least one interference parameter and may contain an output for the at least one transmission parameter. In some embodiments the means for determining the at least one transmission parameter can be implemented in terms of a computer program and a hardware component on which the computer program is executed, such as a DSP, an ASIC, an FPGA or any other processor.

Preferably, the means for determining the at least one interference parameter and the means for determining the at least one transmission parameter may correspond to a single determining unit or determination unit, which performs all three processing steps.

In a further preferred embodiment, the at least one interference parameter may be a second order statistics of the second downlink radio frequency signals or an interference channel matrix of the second downlink radio frequency signals.

According to an even further preferred embodiment, the method may further contain the step of receiving reference signals from the further base station and the determining of the at least one interference parameter may be based on or a function of the received reference signals. Accordingly, the base station may contain means for receiving the reference signals from the further base station.

In embodiments, the means for receiving the reference signals may correspond to any receiving unit or reception unit such as a receiver, transceiver, etc. Hence, in embodiments, the means for receiving the reference signals may contain an input for the reference signals, may contain an algorithm for determining the at least one interference parameter based on or as a function of the received reference signals and may contain an output for the at least one interference parameter. In some embodiments the means for receiving the reference signals can be implemented partly in terms of a computer program and a hardware component on which the computer program is executed, such as a DSP, an ASIC, an FPGA or any other processor.

According to two alternatives, the means for receiving the second uplink radio frequency signals and the means for receiving the reference signals may correspond to a single receiving unit or a single reception unit or may correspond to two receiving units or two reception units.

Preferably, the reference signals may be received within the first frequency range and may be dedicated for the base station. This means, that the reference signals may be only transmitted from the further base station to the base station for the purpose to measure and determine link characteristics of a radio link between the base station and the further base station. A transmission of dedicated reference signals provides the advantage of improving an estimation of an interference channel, when a reception quality of common reference signals may be not sufficient for estimating the interference channel in a reliable way.

More preferable, the dedicated reference signals may be received by a time interval in a range of 10 ms to 50 ms, in a range of 50 ms to 200 ms or in a range of 200 ms to 1 s. This means, that the reference signals may be only sparsely send and may be send with a repetition rate, which is a factor 10 or more smaller than a repetition rate for transmitting for example reference signals from a base station to a mobile station in a cellular radio communication system such as based on 3GPP UMTS (3GPP = Third Generation Partnership Program, or 3GPP LTE, which are transmitted for example every 1 ms subframe.

According to further preferred embodiments, the determining step may contain one or both of the following sub-steps:

- determining at least one pre-coding parameter for the first downlink radio frequency signals for reducing or minimizing an interference of the first downlink radio frequency signals at the location of the further base station,

- determining at least transmission power parameter for the first downlink radio frequency signals for reducing or minimizing the interference of the first downlink radio frequency signals at the location of the further base station.

Accordingly, the base station may contain means for determining the at least one pre-coding parameter and/or means for determining the at least one transmission power parameter.

In embodiments, the means for determining the at least one pre-coding parameter may correspond to any determining unit or determination unit, which determines and selects the at least one pre-coding parameter for the first downlink radio frequency signals for reducing or minimizing an interference of the first downlink radio frequency signals at the location of the further base station. Hence, in embodiments, the means for determining the at least one pre-coding parameter may contain an input for the at least one interference parameter, may contain an algorithm, which determines the at least one pre-coding parameter based on or as a function of the at least one interference parameter for reducing or minimizing an interference of the first downlink radio frequency signals at the location of the further base station and may contain an output for the at least one pre-coding parameter. In some embodiments the means for determining the at least one pre-coding parameter can be implemented in terms of a computer program and a hardware component on which the computer program is executed, such as a DSP, an ASIC, an FPGA or any other processor.

In embodiments, the means for determining the at least one transmission power parameter may correspond to any determining unit or determination unit, which determines and selects the at least one transmission parameter for the first downlink radio frequency signals for reducing or minimizing an interference of the first downlink radio frequency signals at the location of the further base station. Hence, in embodiments, the means for determining the at least one transmission power parameter may contain an input for the at least one interference parameter, may contain an algorithm, which determines the at least one transmission power parameter based on or as a function of the at least one interference parameter for reducing or minimizing an interference of the first downlink radio frequency signals at the location of the further base station and may contain an output for the at least one transmission power parameter. In some embodiments the means for determining the at least one transmission power parameter can be implemented in terms of a computer program and a hardware component on which the computer program is executed, such as a DSP, an ASIC, an FPGA or any other processor.

Preferably, the means for determining the at least one pre-coding parameter and the means for determining the at least one transmission power parameter may correspond to a single determining unit or determination unit, which performs both processing steps.

According to a further preferred embodiment, the method may further contain the step of performing interference rejection combining and/or successive interference cancellation for suppressing interference of the second downlink radio frequency signals. Accordingly, the base station may contain means for performing the interference rejection combining and/or the successive interference cancellation.

In embodiments, the means for performing the interference rejection combining and/or the successive interference cancellation may correspond to any interference rejection combining unit and/or interference cancellation unit, which allows suppressing the interference of the second downlink radio frequency signals, when decoding and demodulating the second uplink radio frequency signals. Hence, in embodiments, the means for performing the interference rejection combining and/or the successive interference cancellation may contain an input for the second uplink radio frequency signals and the second downlink radio frequency signals, may contain an algorithm, which executes the interference rejection combining and/or the successive interference cancellation and may contain an output for the second uplink radio frequency signals having no interference components of the second downlink radio frequency signals. In some embodiments the means for performing the interference rejection combining and/or the successive interference cancellation can be implemented in terms of a computer program and a hardware component on which the computer program is executed, such as a DSP, an ASIC, an FPGA or any other processor.

With respect to further alternative embodiments, the base station and/or the mobile station may be operated in a full-duplex operation mode. This would allow implementing the method also in a traditional FDD system. Thereby, pre-coding and power control could be adapted in real-time.

Further advantageous features of the embodiments of the invention are defined and are described in the following detailed description.

## BRIEF DESCRIPTION OF THE FIGURES

The embodiments of the invention will become apparent in the following detailed description and will be illustrated by accompanying figures given by way of non-limiting illustrations.

Figure 1 a) shows schematically a block diagram of an exemplary heterogeneous radio access network with a macro base station, a first mobile station connected to the macro base station, a micro base station and a second mobile station connected to the micro base station. Transmission directions of radio frequency signals being transmitted within a first frequency range are also indicated. Figure 1 b) shows an exemplarily frequency bandwidth allocation for the first frequency range and a second frequency range.

Figure 2 a) shows schematically a further block diagram of the exemplary heterogeneous radio access network and with transmission directions of further radio frequency signals being transmitted within the second frequency range. Figure 2 b) shows again the exemplarily frequency bandwidth allocation for the first frequency range and the second frequency range.

Figure 3 shows schematically an exemplary flow diagram of a method of a base station being operated within the heterogeneous radio access network and with the base station being the macro base station.

Figure 4 shows schematically an exemplary flow diagram of a method of a mobile station being operated within the heterogeneous radio access network and with the mobile station being the first mobile station.

Figure 5 shows schematically an exemplary block diagram of the base station.

Figure 6 shows schematically an exemplary block diagram of the mobile station.

## DESCRIPTION OF THE EMBODIMENTS

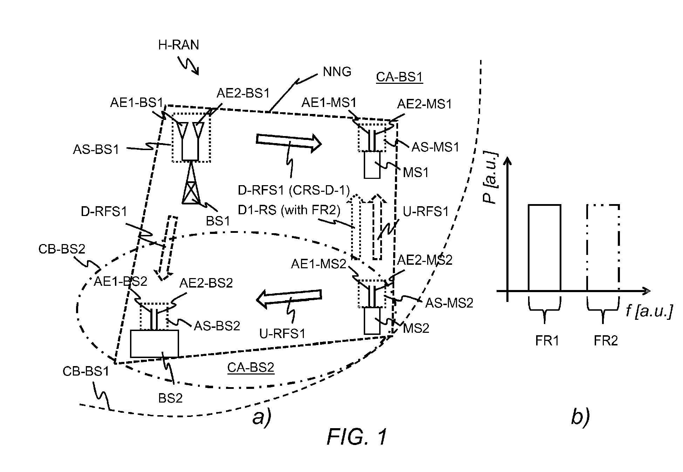

Figure 1 a) shows schematically a heterogeneous radio access network or HetNet H-RAN, which contains exemplarily a macro base station BS1, a micro base station BS2, a first mobile station MS1, and a second mobile station MS2. Further base stations and further mobile stations of the heterogeneous radio access network H-RAN are not shown for simplification. The heterogeneous radio access network H-RAN may apply a radio communication technology based for example on 3GPP UMTS/HSPA (HSPA = High Speed Packet Access) or on 3GPP LTE. The heterogeneous radio access network H-RAN may alternatively apply a radio communication technology based on WLAN such as defined by one of the IEEE 802.11 standards or based on WiMAX (WiMAX = Worldwide Interoperability for Microwave Access) such as one of the IEEE 802.16 family of wireless-networks standards being ratified by the WiMAX Forum, when such radio communication technologies are capable or will be capable in the future to operate in an FDD transmission mode.

The terms "heterogeneous radio access network" or "HetNet" may be considered synonymous to and/or referred to a use of multiple types of access nodes in a wireless network. The wireless network may use a mixture of macro cells, pico cells, and/or femto cells in order to offer wireless coverage in an environment with a wide variety of wireless coverage zones, ranging from an open outdoor environment to office buildings, homes, and underground areas.

The term "base station" may be considered synonymous to and/or referred to as a base transceiver station, access point base station, access point, macro base station, micro base station, femto base station, pico base station etc. and may describe equipment that provides wireless connectivity via one or more radio links to one or more mobile stations.

The term "macro base station" may be considered synonymous to and/or referred to a base station, which provides a radio cell having a size in a range of several hundred meters up to several kilometres. A macro base station usually has a maximum output power of typically tens of watts.

The term "micro base station" may be considered synonymous to and/or referred to a base station, which provides a radio cell having a size in a range of several tens of meters up to hundred meters. A micro base station usually has a maximum output power of typically several watts.

The term "macro cell" may be considered synonymous to and/or referred to a radio cell, which provides the widest range of all radio cell sizes. Macro cells are usually found in rural areas or along highways.

The term "micro cell" may be considered synonymous to and/or referred to a radio cell in a cellular network served by a low power cellular base station, covering a limited area (smaller than an area of a macro cell) such as a mall, a hotel, or a transportation hub. A microcell is referred to a group of radio cells, which contain pico cells and femto cells.

The term "pico cell" may be considered synonymous to and/or referred to a small cellular base station typically covering a small area, such as in-building (offices, shopping malls, train stations, stock exchanges, etc.), or more recently in-aircraft. In cellular networks, pico cells are typically used to extend coverage to indoor areas where outdoor signals do not reach well, or to add network capacity in areas with very dense phone usage, such as train stations.

The term "femto cell" may be considered synonymous to and/or referred to a small, low-power cellular base station, typically designed for use in a home or small business. A broader term which is more widespread in the industry is small cell, with femto cell as a subset.

The term "mobile station" may be considered synonymous to, and may hereafter be occasionally referred to, as a mobile unit, mobile user, access terminal, user equipment, subscriber, user, remote station etc. The mobile station RAN1-MS may be for example a cellular telephone, a portable computer, a pocket computer, a hand-held computer, a personal digital assistant or a vehicle-mounted mobile device such as a car-mounted mobile device.

The first mobile station MS1 may be served by the macro base station BS1. In a similar way, the second mobile station MS2 may be served by the micro base station BS2. The macro base station BS1 may provide wireless coverage for a macro cell CA-BS1 and the micro base station BS2 may provide wireless coverage for a micro cell CA-BS2. A cell border CB-BS1 of the macro cell CA-BS1 is shown in Figure 1 a) by a dashed line. A cell border CB-BS2 of the micro cell CA-BS2 is shown in Figure 1 a) by a dashed-dotted line.

The micro base station BS2 may be located within the macro cell CA-BS1 for increasing a transmission capacity in a specific region of the macro cell CA-BS1. Alternatively, further micro base stations may be located with the macro cell CA-BS1.

Exemplarily, the macro base station BS1 may be connected to an antenna system AS-BS1 with two antenna elements AE1-BS1, AE2-BS1, the micro base station BS2 may be connected to an antenna system AS-BS2 with two antenna elements AE1-BS2, AE2-BS2, the first mobile station MS1 may be connected to an antenna system AS-MS1 with two antenna elements AE1-MS1, AE2-MS2 and the second mobile station MS2 may be connected to an antenna system AS-MS2 with two antenna elements AE1-MS2, AE2-MS2. In further alternatives, the antenna systems AS-BS1, AS-BS2, AS-MS1, and AS-MS2 may contain four antenna elements, eight antenna elements or even more antenna elements.

Following communication directions of a so-called reverse FDD operation or transmission mode are shown in Figure 1 a): The macro base station BS1 transmits first downlink radio frequency signals D-RFS1 with spectral components of a first frequency range FR1 to the first mobile station MS1, which receives the first downlink radio frequency signals D-RFS1 as useful radio frequency signals. The second mobile station MS2 transmits first uplink radio frequency signals U-RFS1 with spectral components of the first frequency range FR1 to the micro base station BS2, which receives the first uplink radio frequency signals U-RFS1 also as useful radio frequency signals. The first frequency range FR1 is shown in Figure 1 b) by a graph or a spectral diagram for an exemplarily frequency bandwidth allocation of the first frequency range FR1 and a second frequency range FR2, which is also indicated in Figure 1 b) by a dashed and twice dotted line. The first frequency range FR1 may be for example a frequency range from 2640 MHz to 2660 MHz and the second frequency range FR2 may be for example a frequency range from 2520 MHz to 2540 MHz such as applied by Telekom (former T-Mobile) in Germany for LTE.

The transmission of the first downlink radio frequency signals D-RFS1 may be attended by so-called first common reference signals CRS-D-1, which may be transmitted by the macro base station BS1 for example in case of 3GPP LTE every 1 ms subframe.

The term "reference signal" may be considered synonymous to and/or referred to as a reference symbol, CSI-reference symbol (CSI = Channel State Information), pilot, pilot signal, pilot symbol, beacon, beacon signal etc.

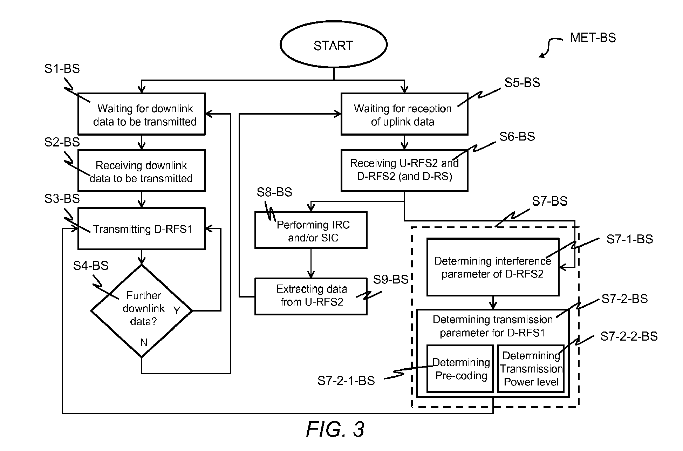

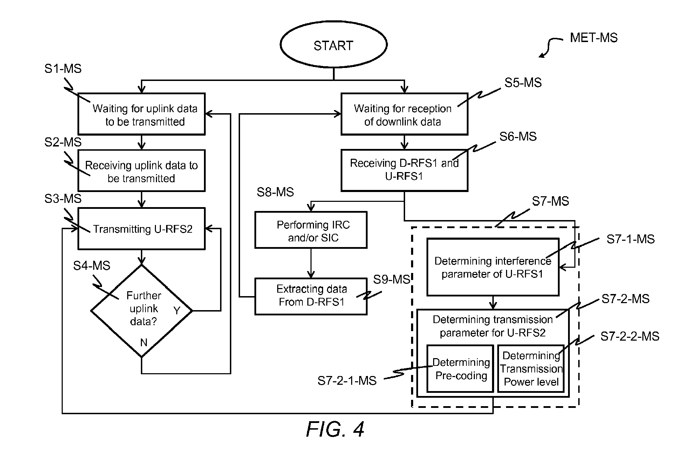

In one embodiment when the antenna system AS-MS2 of the second mobile station MS2 contains two or more antenna elements, the second mobile station MS2 may transmit first dedicated non-directional reference signals D1-RS from the antenna elements AE1-MS2, AE2-MS2 preferably using a second frequency range FR2 to mobile stations in the neighbourhood such as the first mobile station MS1. This means, that the first dedicated non-directional reference signals D1-RS may be only transmitted to other mobile stations and measured by the other mobile stations and the micro base station BS2 don't process the first dedicated non-directional reference signals D1-RS. Further explanations will be given with respect to the description of Figure 4. Due to a close location of the macro base station BS1, the micro base station BS2, the first mobile station MS1 and the second mobile station MS2 a radio communication between the macro base station BS1 and the first mobile station MS1 interferes with a further radio communication between the micro base station BS2 and the second mobile station MS2. Therefore, the first downlink radio frequency signals D-RFS1 are also received by the micro base station BS2 as an interfering signal and the first uplink radio frequency signals U-RFS1 are received by the first mobile station MS1 also as an interfering signal. How this interference can be reduced or minimized will be explained in the following description with respect to Figure 3 and Figure 4.

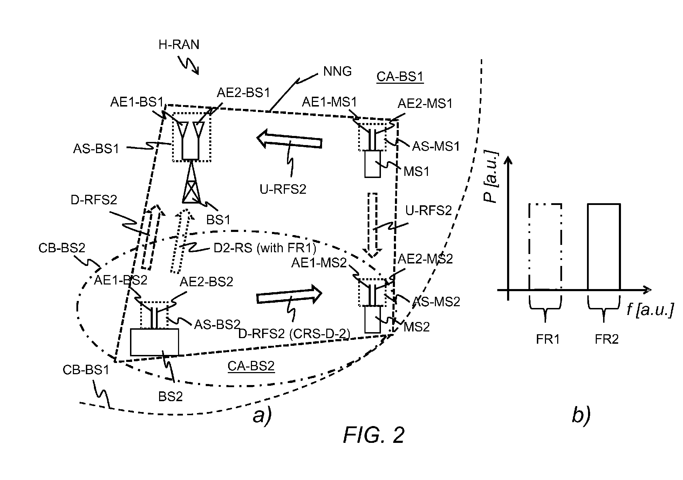

Figure 2 a) shows, how the heterogeneous radio access network or HetNet H-RAN is operated on a second frequency range FR2. The first mobile station MS1 transmits second uplink radio frequency signals U-RFS2 with spectral components of the second frequency range FR2 to the macro base station BS1, which receives the second uplink radio frequency signals U-RFS2 as useful signals and the micro base station BS2 transmits second downlink radio frequency signal D-RFS2 with spectral components of the second frequency range FR2 to the second mobile station MS2, which receives the second downlink radio frequency signal D-RFS2 as useful signals. The frequency allocation of the second frequency range FR2 with respect to the first frequency range FR1 is shown in Figure 2 b).

The transmission of the second downlink radio frequency signals D-RFS2 may be attended by so-called second common reference signals CRS-D-2, which may be transmitted by the micro base station BS2 for example in case of 3GPP LTE every 1 ms subframe.

As mentioned above, because of the close location of the macro base station BS1, the micro base station BS1, the first mobile station MS1 and the second mobile station MS2 the radio communication between the macro base station BS1 and the first mobile station MS1 interferes with the further radio communication between the micro base station BS2 and the second mobile station MS2. Therefore, the second uplink radio frequency signals U-RFS2 are also received by the second mobile station MS2 as an interfering signal and the second downlink radio frequency signals D-RFS2 are also received by the macro base station BS1 also as an interfering signal. How this interference can be reduced or minimized will be explained in the following description with respect to Figure 3.

In one embodiment, the micro base station BS2 may transmit second dedicated non-directional reference signals D2-RS from the antenna elements AE1-BS2, AE2-BS2 preferably using the first frequency range FR1 to the macro base station BS1. This means, that the second dedicated non-directional reference signals D2-RS may be only transmitted to the macro base station BS1 and measured by the macro base station BS1 and mobile stations don't process the second dedicated non-directional reference signals D2-RS. Further explanations will be given with respect to the description of Figure 3.

The first downlink radio frequency signals D-RFS1, the first uplink radio frequency signals U-RFS1, the second uplink radio frequency signals U-RFS2 and the second downlink radio frequency signal D-RFS2 may carry and transfer signalling data and/or user data and/or common reference signals such as applied in WLAN, WiMAX, GSM/GPRS, UMTS/HSPA or LTE.

The reverse FDD operation or transmission mode means with respect to Figure 1 and Figure 2, that on the first frequency range FR1 the macro base station BS1 transmits the first downlink radio frequency signals D-RFS1 and the micro base station BS2 receives first uplink radio frequency signals U-RFS1 and on the second frequency range FR2 the macro base station BS1 receives the second uplink radio frequency signals U-RFS2 and the micro base station BS2 transmits the second downlink radio frequency signals D-RFS2.

Figure 3 shows a flow diagram of a method MET-BS, which may be executed by the macro base station BS1 or the micro base station BS2 of the heterogeneous radio access network H-RAN, which is shown in Figure 1 a) and Figure 2 a). The number of the steps for performing the method MET-BS is not critical, and as can be understood by those skilled in the art that the number of the steps and the sequence of the steps may vary without departing from the scope of the embodiments of the invention as defined in the appended claims.

In the following, the method MET-BS will be described with respect to the macro base station BS1, i.e. the macro base station BS1 executes the method MET-BS. A person skilled in the art may easily adapt the method MET-BS to be executed by the micro base station BS2.

The method MET-BS may be started for example, when the first mobile station MS1 has been switched on within the coverage area of the radio cell of the macro base station BS1 and has been connected to the macro base station BS1 for being a serving base station of the first mobile station MS1. The method MET-BS may be also started, when the first mobile station MS1 has been made for example a handover from a further macro base station (not shown in Figure 1 a) and Figure 2 a) for simplification) to the macro base station BS1.

In a first step S1-BS, the macro base station BS1 may be in a waiting state for first downlink user data or for first downlink signalling data to be transmitted to the first mobile station MS1.

In a further step S2-BS, the first downlink user data and/or the first downlink signalling data from higher layers such as the TCP or UDP layer may be received at the link layer for transmission to the first mobile station MS1.

In a next step S3-BS, the macro base station BS1 may transmit to the first mobile station MS1 the first downlink radio frequency signals D-RFS1, which contain the first downlink user data and/or the first downlink signalling data. The macro base station BS1 may transmit in parallel to the first downlink radio frequency signals D-RFS1 the common reference signals CRS-D-1 to its attached mobile stations such as the first mobile station MS1.

In a further step S4-BS, the macro base station BS1 verifies, whether further first downlink user data or further first downlink signalling data are available for transmission to the first mobile station MS1. If further first downlink user data or further first downlink signalling data are available, next step will be again the step S3-BS. When the step S3-BS is executed again, updated or adapted transmission parameters may be applied, which are determined in parallel by a step S7-BS (see following description). If no further first downlink user data and no further first downlink signalling data are available, the step S1-BS will be the next step.

In a further step S5-BS, which may be executed after starting the method MET-BS, the macro base station BS1 may be in a waiting state for receiving uplink data from the first mobile station MS1.

In a further step S6-BS, which may be executed simultaneously with the step S1-BS or at least overlaps with step S1-BS, the macro base station BS1 receives the second uplink radio frequency signals U-RFS2, which are transmitted by the first mobile station MS1 using the second frequency range FR2. During the step S6-BS, the macro base station BS1 may also receive the second downlink radio frequency signals D-RFS2, which are transmitted from the micro base station BS2 to the second mobile station MS2. The second downlink radio frequency signals D-RFS2 may be received by the macro base station BS1 as interfering signals, which interfere with the second uplink radio frequency signals U-RFS2. The step may be executed as long as first uplink user data or first uplink signalling data are received from the first mobile station MS1 or the second downlink radio frequency signals D-RFS2 are received from the micro base station BS1.

In one embodiment as already mentioned with respect to Figure 2 a), the micro base station BS2 may also transmit the second dedicated non-directional reference signals D2-RS using the first frequency range FR1 for a dedicated reception by the macro base station BS1. In such a case, the receiver or the transceiver of the macro base station BS1 may be also adjusted for a reception of the second dedicated non-directional reference signals D2-RS within the first frequency range FR1.

The second dedicated non-directional reference signals D2-RS may be transmitted with a significant longer time period (factor 10 or larger) than applied for a transmission of common reference signals on a downlink from a base station to a mobile station. Preferably, the second dedicated non-directional reference signals D2-RS may be transmitted by a time interval in a time range from 10 ms to 50 ms or in a further time range from 50 ms to 200 ms or in an even further time range from 200 ms to 1 s.

According to a further embodiment, the macro base station BS1 may be configured to operate in a full-duplex operation mode, which allows the macro base station BS1 to transmit radio frequency signals and to receive further radio frequency signals using different frequency ranges at a same time.

In a next step S7-BS, the macro base station BS1 determines at least one transmission parameter for a further transmission of the first downlink radio frequency signals D-RFS1. The determination may be based on the interference of the second downlink radio frequency signal D-RFS2, which are received by the macro base station BS1. The at least one transmission parameter may be adapted for reducing or avoiding interference of the further transmission of the first downlink radio frequency signals D-RFS1 at a location of the micro base station BS2. The determination of the at least one transmission parameter may be done for example in a following way:

In a first sub-step S7-1-BS, the macro base station BS1 may determine at least one interference parameter of the interference of the received second downlink radio frequency signal D-RFS2. The at least one interference parameter may be for example a second order statistics, which may be determined for example in a following way: The macro base station BS1 may estimate channel coefficients of a transmission channel $H$ for a transmission of the interfering second downlink radio frequency signals D-RFS2 from the micro base station BS2 to the macro base station BS1. Assuming channel reciprocity, the transmission channel $H$ has a dimension of [$NxM$] with $N$ being a number of transmit antenna elements, which are applied by the micro base station BS2 for the transmission of the second downlink radio frequency signals D-RFS2 and $M$ being a number of receive antenna elements, which are applied by the macro base station BS1 for the reception of the second downlink radio frequency signals D-RFS2. The second order statistics may be obtained by calculating for the macro base station BS1 a transmitter covariance matrix $R$ with dimension [$MxM$] for the transmission channel $H$ for example by applying following operation:

$$R = E\{H'xH\} \qquad (1)$$

with:

$H'$ being the hermitian of the transmission channel $H$,

$E\{...\}$ being the expected value (or expectation, mathematical expectation, EV, mean, or first moment) of the operation within the brackets and refers, intuitively, to a value of a random variable one would "expect" to find if one could repeat a random variable process an infinite number of times and take an average of the values obtained.

Preferably for an accurate determination, at least $M$ samples should be considered for the calculation of the covariance matrix $R$.

According to an alternative embodiment, the second dedicated non-directional reference signals D2-RS, which are transmitted from the micro base station BS2 may be applied for obtaining an instantaneously usable transmission channel matrix *H* for the first downlink radio frequency signals D-RFS1 transmitted within the first frequency range FR1. A determination of such a transmission channel matrix *H* by using reference signals, which have been received in the same frequency range, is well-known to skilled persons in the art and therefore the calculation is not explained in more detail.In a further sub-step S7-2-BS, the macro base station BS1 determines at least one transmission parameter for a further transmission of the first downlink radio frequency signals D-RFS1 by using and exploiting the determined interference level and/or by using and exploiting the estimated transmission channel *H*.

A transmission parameter to be determined may be for example a pre-coding vector *w* to be applied for the further transmission of the first downlink radio frequency signals D-RFS1 towards the first mobile station MS1. The determination of the pre-coding vector *w* may be done for example in a following way:

One of the goals of the method MET-BS is to transmit minimal electromagnetic energy from the macro base station BS1 towards the location of the micro base station BS2 and preferably towards the coverage area of the micro cell CA-BS2 of the micro base station BS2. This requirement may be represented by following equations:

$$|H \cdot w|^2 = w' \cdot H' \cdot H \cdot w \approx w' \cdot E\{R\} \quad \cdot w \qquad (2a)$$

$$minimize_{\{w\}}(w'E\{R\}w) \qquad (2b)$$

Algorithms well-known for persons skilled in the art such as zero forcing may be executed in a sub-step S7-2-1-BS for obtaining at least one pre-coding vector *w*, which fulfils the equation (2b). Furthermore, algorithms like Signal to Leakage plus Noise (SLNR) optimization may provide a pre-coding vector *w*, which optimizes a ratio between a signal strength received at the first mobile station MS1 and the interference received at the micro base station BS2.

An alternative transmission parameter or a further transmission parameter to be determined may be for example a transmission power value to be applied for the further transmission of the first downlink radio frequency signals D-RFS1 towards the first mobile station MS1.

When the at least one transmission parameter for a further transmission of the first downlink radio frequency signals D-RFS1 has been determined, the at least one transmission parameter will be used during a next execution of the step S1-BS.

During a further step S8-BS, which may be executed after the step S6-BS, the macro base station BS1 may perform a so-called IRC (IRC = interference rejection combining) known to persons skilled in the art or a so-called SIC (SIC = successive interference cancellation) also known to persons skilled in the art for improving an SINR (SINR = signal to Interference-plus-Noise Ratio) of wanted signals or useful signals by cancelling and/or by subtracting unwanted signals or unusable signals (equivalent to interfering signals). With respect to the embodiment shown in Figure 1 and 2, the wanted signals or the useful signals are the second uplink radio frequency signals U-RFS2 and the unwanted signals or the unusable signals are the second downlink radio frequency signal D-RFS2.

For the IRC, in a first sub-step a channel towards an interferer may be estimated for example based on reference signals transmitted by the interferer and in a second sub-step receive weights for antenna elements of a reception antenna system may be chosen based on the estimated channel in such a way, that the unwanted signal or the unusable signal is cancelled out, or, that a ratio between the wanted signal and the unwanted signal is maximized. With respect to the embodiment shown in Figure 1 and 2, the interfering channel is a transmission channel of the second downlink radio frequency signals D-RSF2 and the interferer is the micro base station BS2.

For the SIC, in a first sub-step, the interfering signal may be decoded to obtain an interfering stream of symbols such as OFDM symbol, in a second sub-step the interfering signal may be reconstructed at the antenna elements of the reception antenna system based on the interfering steam of decoded symbols and in a third sub-step the reconstructed interfering signal may be subtracted from a received total signal, which is given by the received useful signal and the received unusable signal.

In a next step S9-BS, the first uplink user data and/or the first uplink signalling data may be extracted from the received useful signal (i.e. the second uplink radio frequency signals U-RFS2) and the first uplink user data and/or the first uplink signalling data may be further processed for transmitting the uplink user data to a further network node such as an MME (MME = Management Mobility Entity) used in LTE or for providing the uplink signalling data for example to a control entity at the macro base station BS1. The next step, which may be executed after the step S9-BS may be again the step S5-BS.

Figure 4 shows a flow diagram of a method MET-MS, which may be executed by the first mobile station MS1 or the second mobile station MS2 of the heterogeneous radio access network H-RAN, which is shown in Figure 1 a) and Figure 2 a). The number of the steps for performing the method MET-MS is not critical, and as can be understood by those skilled in the art that the number of the steps and the sequence of the steps may vary without departing from the scope of the embodiments of the invention as defined in the appended claims.

In the following, the method MET-MS will be described with respect to the first mobile station MS1, i.e. the first mobile station station MS1 executes the method MET-MS. A person skilled in the art may easily adapt the method MET-MS to be executed by the second mobile station MS2.

The method MET-MS may be started for example, when the first mobile station MS1 has been switched on within the coverage area of the radio cell of the macro base station BS1 and has been connected to the macro base station BS1 for being a serving base station of the first mobile station MS1. The method MET-BS may be also started, when the first mobile station MS1 has been made for example a handover from a further macro or micro base station (not shown in Figure 1 a) and Figure 2 a) for simplification) to the macro base station BS1.

In a first step S1-MS, the first mobile station MS1 may be in a waiting state for second uplink user data or for second uplink signalling data to be transmitted to the macro base station BS1.

In a further step S2-MS, the second uplink user data and/or the second uplink signalling data from higher layers such as the TCP or UDP layer may be received at the link layer for transmission to the macro base station BS1.

In a next step S3-MS, the first mobile station MS1 may transmit to the macro base station BS1 the second uplink radio frequency signals U-RFS2, which contain the second uplink user data and/or the second uplink signalling data.

In a further step S4-MS, the first mobile station MS1 verifies, whether further second uplink user data or further second uplink signalling data are available for transmission to the macro base station BS1. If further second uplink user data or further second uplink signalling data are available, next step will be again the step S3-MS. When the step S3-MS is executed again, updated or adapted transmission parameters may be applied, which are determined in parallel by a step S7-MS (see following description). If no further second uplink user data and no further second uplink signalling data are available, the step S1-MS will be the next step.

In a further step S5-MS, which may be executed after starting the method MET-MS, the first mobile station MS1 may be in a waiting state for receiving the first downlink radio frequency signals D-RFS1 from the macro base station BS1.

In a further step S6-MS, the first mobile station MS1 receives the first downlink radio frequency signals D-RFS1, which are transmitted by the macro base station BS1 using the first frequency range FR1. During the step S6-MS, the second mobile station MS2 may also transmit the first uplink radio frequency signals U-RFS1 using the first frequency range FR1 to the micro base station BS1. The first uplink radio frequency signals U-RFS1 may be received by the first mobile station MS1 as interfering signals, which interfere with the first downlink radio frequency signals D-RFS1.

According to a further embodiment, the first mobile station MS1 may be configured to operate in a full-duplex operation mode, which allows the first mobile station MS1 to transmit radio frequency signals and to receive further radio frequency signals using a different frequency range at a same time.

In a next step S7-MS, the first mobile station MS1 determines at least one transmission parameter for a further transmission of the second uplink radio frequency signals U-RFS2. The determination may be based on the interference of the first uplink radio frequency signal U-RFS1, which are received by the first mobile station MS1. The at least one transmission parameter may be adapted for reducing or avoiding interference of the further transmission of the second uplink radio frequency signals U-RFS2 at a location of the second mobile station MS2. The determination of the at least one transmission parameter may be done for example in a following way:

In a first sub-step S7-1-MS, the first mobile station MS1 may determine at least one interference parameter of the interference of the received first uplink radio frequency signals U-RFS1 in a similar way as described with respect to Figure 3 for the interference of the second downlink radio frequency signals D-RFS2.

The first mobile station MS1 may determine the covariance matrix R for an interfering channel of the first uplink radio frequency signals U-RFS1. This means generally, that the interfering channel is a transmission channel for radio frequency signals propagating from the second mobile station MS2 being attached to the micro base station BS1 towards the first mobile station MS1 being attached to the macro base station BS1.

According to an alternative embodiment, the first dedicated non-directional reference signals D1-RS, which are transmitted from the second mobile station MS2 may be applied for obtaining an instantaneously usable transmission channel matrix H for the second uplink radio frequency signals U-RFS2 transmitted within the second frequency range FR2. A determination of such a transmission channel matrix H by using reference signals, which have been received in the same frequency range, is well-known to skilled persons in the art and therefore the calculation is not explained in more detail.

In a further sub-step S7-2-MS, the first mobile station MS1 determines at least one transmission parameter for a further transmission of the second uplink radio frequency signals U-RFS2 in a same way as described with respect to Figure 3 for the further transmission of the first downlink radio frequency signals D-RFS1.

Preferably, when sub-step S7-2-1-MS is based on a calculation of the covariance matrix R, the first mobile station MS1 should have a travelling speed below for example 30km/h because a number of measurement samples are required to estimate and calculate the covariance matrix R with a sufficient precision. For calculation the transmission power level by sub-step S7-2-2-MS, it is sufficient for the first mobile station MS1 to know the path loss for the transmission of the first uplink radio frequency signals U-RFS1 from the second mobile station MS2 to the first mobile station MS1.

The second mobile station MS2 is generally very close located to the micro base station BS2 because of a much smaller coverage area CA-BS2 of the micro base station BS when compared with a size of the coverage area CA-BS1 of the macro base station BS1. Therefore, a transmission power value for a further transmission of the first uplink radio frequency signals U-RFS1 may be determined in such a case based on conventional power control, which is known to skilled persons in the art, when the method MET-MS may be performed by the second mobile station MS2.

During a further step S8-MS, which may be executed after the step S6-MS, the first mobile station MS1 may perform the IRC or the SIC in a same way as described with respect to Figure 3 for an execution of the step S8-BS.

In a next step S9-MS, the first downlink user data and/or the first downlink signalling data may be extracted from the received useful signal (i.e. the first downlink radio frequency signals D-RFS1) and the first downlink user data and/or the first downlink signalling data may be further processed such as providing the first dowlink user data to an application client of an application or a so-called App running at the first mobile station MS1 or providing the first downlink signalling data to a control entity at the first mobile station MS1 for providing one or several operation parameters to be used by the first mobile station MS1 for a further operation of the first mobile station MS1. The next step, which may be executed after the step S9-MS may be again the step S5-MS.

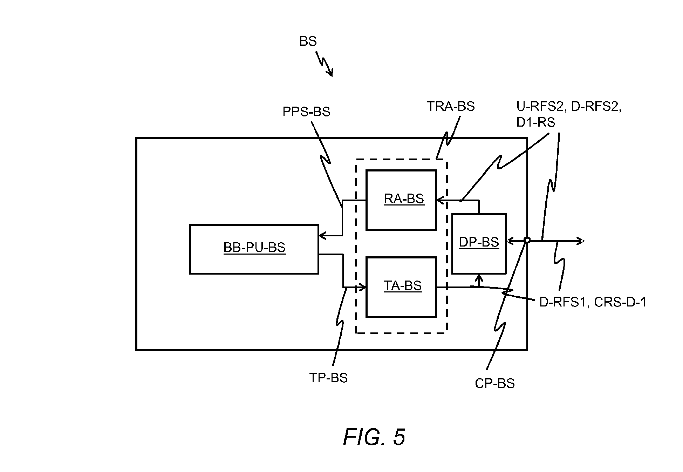

Figure 5 shows exemplarily a base station BS, which executes the method MET-BS (see Figure 3) and which may be the macro base station BS1 or the micro base station BS2 shown in Figure 1 and Figure 2. A splitting of processing functions across processing units shown in Figure 5 is not critical, and as can be understood by those skilled in the art that the number of processing units, the number of processing functions and an allocation of the processing functions to the processing units may vary without departing from the scope of the embodiments of the invention as defined in the appended claims.

The base station BS may contain a connection point CP-BS for a fibre connection or a wire connection to an antenna system, a duplexer DP-BS, a receiver apparatus RA-BS, a transmitter apparatus TA-BS and a baseband processing unit BB-PU-BS. The receiver apparatus RA-BS and the transmitter apparatus TA-BS may be for example parts of a transceiver apparatus TRA-BS or may be separate units.

Following description is given exemplarily for the case, when the base station BS is the macro base station BS1.

The second uplink radio frequency signals U-RFS2, the second downlink radio frequency signals D-RFS2 and optionally the second dedicated non-directional reference signals D2-RS, which have been received by the antenna system AS-BS1, may be provided via the connection point CP-BS and the duplexer DP-BS to the receiver apparatus RA-BS.

The steps S5-BS and S6-BS of the method MET-BS may be executed by the receiver apparatus RA-BS, which may perform for example a pre-processing for the received second uplink radio frequency signals U-RFS2, the second downlink radio frequency signals D-RFS2 and the second dedicated non-directional reference signals D2-RS with steps such as down-conversion, demodulation and/or decoding for obtaining pre-processed signals PPS-BS. The receiver apparatus RA-BS may provide the pre-processed signals PPS-BS to the baseband processing unit BB-PU-BS.

The steps S7-BS, S8-BS and S9-BS of the method MET-BS may be executed for example by the baseband processing unit BB-PU-BS by further processing the pre-processed signals PPS-BS for obtaining the at least one transmission parameter TP-BS. The baseband processing unit BB-PU-BS may provide the at least one transmission parameter TP-BS to the transmitter apparatus TA-BS.

The steps S1-BS, S2-BS, S3-BS and S4-BS of the method MET-BS may be executed by the transmitter apparatus TA-BS. The first downlink radio frequency signals D-RFS1 and the common reference signals CRS-D-1 may be provided via the duplexer DP-BS and the connection point CP-BS to the antenna system AS-BS1.

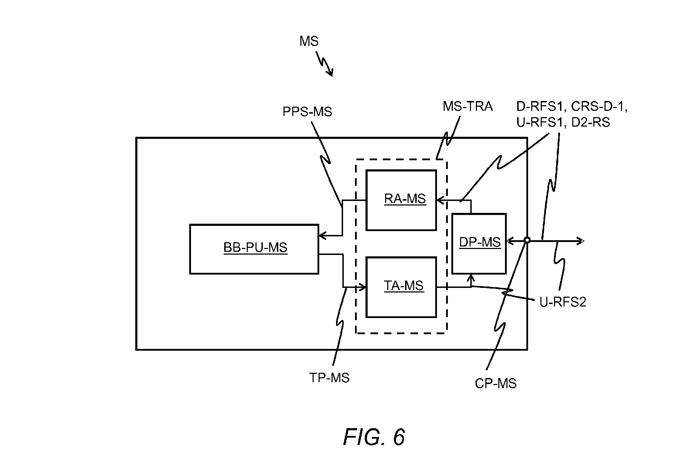

Figure 6 shows exemplarily a mobile station MS, which executes the method MET-MS (see Figure 4) and which may be the first mobile station MS1 or the second mobile station MS2 shown in Figure 1 and Figure 2. A splitting of processing functions across processing units shown in Figure 6 is not critical, and as can be understood by those skilled in the art that the number of processing units, the number of processing functions and an allocation of the processing functions to the processing units may vary without departing from the scope of the embodiments of the invention as defined in the appended claims.

The mobile station MS may contain a connection point CP-MS for a wire connection to an antenna system, a duplexer DP-MS, a receiver apparatus RA-MS, a transmitter apparatus TA-MS and a baseband processing unit BB-PU-MS. The receiver apparatus RA-MS and the transmitter apparatus TA-MS may be for example parts of a transceiver apparatus TRA-MS or may be separate units.

Following description is given exemplarily for the case, when the mobile station MS is the first mobile station MS1.

The first downlink radio frequency signals D-RFS1, the first uplink radio frequency signals U-RFS1 and the common reference signals CRS-D-1, which have been received by the antenna system AS-MS1, may be provided via the connection point CP-MS and the duplexer DP-MS to the receiver apparatus RA-MS.

The steps S5-MS, S6-MS of the method MET-MS may be executed by the receiver apparatus RA-MS, which may perform for example a pre-processing for the received first downlink radio frequency signals D-RFS1, the first uplink radio frequency signals U-RFS1 and the common reference signals CRS-D-1 with steps such as down-conversion, demodulation and/or decoding for obtaining pre-processed signals PPS-MS. The receiver apparatus RA-MS may provide the pre-processed signals PPS-MS to the baseband processing unit BB-PU-MS.

The steps S7-MS, S8-MS and S9-MS of the method MET-MS may be executed for example by the baseband processing unit BB-PU-MS by further processing the pre-processed signals PPS-BS for obtaining the at least one transmission parameter TP-MS. The baseband processing unit BB-PU-MS may provide the at least one transmission parameter TP-MS to the transmitter apparatus TA-MS.

The steps S1-MS, S2-MS, S3-MS and S4-MS of the method MET-MS may be executed by the transmitter apparatus TA-MS. The second uplink radio frequency signals U-RFS2 may be provided via the duplexer DP-MS and the connection point CP-MS to the antenna system AS-MS1.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for transmitting", "means for receiving", "means for determining" etc. (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods MET-BS, MET-MS disclosed in the specification or in the claims may be implemented by a device having means for performing each of the respective steps of these methods. Preferably, a computer program product may contain computer-executable instructions for performing the methods MET-BS, MET-MS, when the computer program product is executed on a programmable hardware device such as a DSP, an ASIC or an FPGA. Preferably, a digital data storage device may encode a machine-executable program of instructions to perform the method MET-BS.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1. A method (MET-BS) for operating a base station (BS, BS1) in a heterogeneous radio access network (H-RAN) comprising a network node group (NG) of a macro base station (BS1), at least one first mobile station (MS1) connected to said macro base station (BS1), a micro base station (BS2) located within a coverage area (CA-BS1) of said macro base station (BS1) and at least one second mobile station (MS2) connected to said micro base station (BS2), said method (MET) comprising:

   - transmitting (S1-BS) from said base station (BS, BS1) of said network node group (NNG) to a mobile station (MS, MS1) of said network node group (NNG) first downlink radio frequency signals (D-RFS1) of a first frequency range (FR1), when a further mobile station (MS, MS2) of said network node group (NNG) provides a transmission of first uplink radio frequency signal (U-RFS1) of said first frequency range (FR1) to a further base station (BS, BS2) of said network node group (NNG), and receiving (S6-BS) at said base station (BS, BS1) from said mobile station (MS, MS1) second uplink radio frequency signal (U-RFS2) of a second frequency range (FR2), when said further base station (BS, BS2) provides to said further mobile station (MS, MS2) a transmission of second downlink radio frequency signal (D-RFS2) of said second frequency range (FR2), and
   - determining (S7-BS) at said base station (BS, BS1) at least one transmission parameter (TP-BS) for a further transmission of said first downlink radio frequency signals (D-RFS1) based on an interference of said second downlink radio frequency signals (D-RFS2) for adapting said further transmission of said first downlink radio frequency signals (D-RFS1) and for reducing interference of said first downlink radio frequency signals (D-RFS1) at a location of said further base station (BS, BS2).

2. Method (MET-BS) according to claim 1, wherein said determining (S7-BS) comprises:

   - determining (S7-1-BS) at least one interference parameter of said interference of said second downlink radio frequency signals (D-RFS2) received by said base station (BS, BS1), and
   - determining (S7-2-BS) said at least one transmission parameter (TP-BS) based on said at least one interference parameter.

3. Method (MET-BS) according to claim 2, wherein said at least one interference parameter is a second order statistics of said second downlink radio frequency signals (D-RFS2) or an interference channel matrix of said second downlink radio frequency signals (D-RFS2).

4. Method (MET-BS) according to any of the preceding claims, wherein said method (MET-BS) further comprises receiving (S6-BS) reference signals (D-RS) from said further base station (BS, BS2) and wherein said determining (S7-BS) comprises determining (S7-1-BS) said at least interference parameter based on said received reference signals (D-RS).

5. Method (MET-BS) according to claim 4, wherein said reference signals (D-RS) are received within said first frequency range (FR1) and are dedicated for said base station (BS, BS1).

6. Method (MET-BS) according to claim 5, wherein said dedicated reference signals (D-RS) are received by a time interval in a range of 10 ms to 50 ms, in a range of 50 ms to 200 ms or in a range of 200 ms to 1 s.

7. Method (MET-BS) according to any of the preceding claim, wherein said determining (S7-BS) comprises at least one of the following:

   - determining (S7-2-1-BS) at least one pre-coding parameter for said first downlink radio frequency signals (D-RFS1) for reducing an interference of said first downlink radio frequency signals (D-RFS1) at said location of said further base station (BS, BS1),
   - determining (S7-2-2-BS) at least one transmission power parameter (TP-BS) for said first downlink radio frequency signal (D-RFS1) for reducing an interference of said first downlink radio frequency signal (D-RFS1) at said location of said further base station (BS, BS1).

8. Method (MET-BS) according to any of the preceding claims, wherein said method (MET-BS) further comprises performing (S8-BS) interference rejection combining and/or successive interference cancellation for suppressing interference of said second downlink radio frequency signal (D-RFS2).

9. Method (MET-BS) according to any of the preceding claims, wherein said base station (BS, BS1) is operated in a full-duplex operation mode.

10. A method (MET-MS) for operating a mobile station (MS, MS1) in a heterogeneous radio access network (H-RAN) comprising a network node group (NNG) of a macro base station (BS1), at least one first mobile station (MS1) connected to said macro base station (BS1), a micro base station (BS2) located within a coverage area (CA-BS1) of said macro base station (BS1) and at least one second mobile station (MS2) connected to said micro base station (BS2), said method (MET-MS) comprising:

   - transmitting (S1-MS) from said mobile station (MS, MS1) of said network node group (NNG) to a base station (BS, BS1) of said network node group (NNG) second uplink radio frequency signals (U-RFS2) of a second frequency range (FR2), when a further base station (BS, BS2) of said network node group (NNG) provides a transmission of second downlink radio frequency signal (D-RFS2) of said second frequency range (FR2) to a further mobile station (MS, MS2) of said network node group (NNG), and receiving (S2-MS) at said mobile station (MS, MS1) from said base station (BS, BS1) first downlink radio frequency signal (D-RFS1) of a first frequency range (FR1), when said further mobile station (MS, MS2) provides to said further base station (BS, BS2) a transmission of first uplink radio frequency signal (U-RFS1) of said first frequency range (FR1), and
   - determining (S7-MS) at said mobile station (MS, MS1) at least one transmission parameter (TP-MS) for a further transmission of said second uplink radio frequency signals (U-RFS2) based on an interference of said first uplink radio frequency signals (U-RFS1) for adapting said further transmission of said second uplink radio frequency signals (U-RFS2) and for reducing interference of said second uplink radio frequency signals (U-RFS2) at a location of said further mobile station (MS, MS2).

11. A base station (BS, BS1) for operating in a heterogeneous radio access network (H-RAN) comprising a network node group (NG) of a macro base station (BS1), at least one first mobile station (MS1) connected to said macro base station (BS1), a micro base station (BS2) located within a coverage area (CA-BS1) of said macro base station (BS1) and at least one second mobile station (MS2) connected to said micro base station (BS1), said base station (BS, BS1) comprising:

   - means (BS-TRA) for transmitting from said base station (BS, BS1) of said network node group (NNG) to a mobile station (MS, MS1) of said network node group (NNG) first downlink radio frequency signals (D-RFS1) of a first frequency range (FR1), when a further mobile station (MS, MS2) of said network node group (NNG) provides a transmission of first uplink radio frequency signal (U-RFS1) of said first frequency range (FR1) to a further base station (BS, BS2) of said network node group (NNG), and for receiving (S6-BS) at said base station (BS, BS1) from said mobile station (MS, MS1) second uplink radio frequency signal (U-RFS2) of a second frequency range (FR2), when said further base station (BS, BS2) provides to said further mobile station (MS, MS2) a transmission of second downlink radio frequency signal (D-RFS2) of said second frequency range (FR2), and
   - means (BB-PU-BS) for determining at least one transmission parameter (TP-BS) for a further transmission of said first downlink radio frequency signals (D-RFS1) based on an interference of said second downlink radio frequency signals (D-RFS2) for adapting said further transmission of said first downlink radio frequency signals (D-RFS1) and for reducing interference of said first downlink radio frequency signals (D-RFS1) at a location of said further base station (BS, BS2).

12. Base station (BS, BS1) according to claim 11, wherein said base station (BS, BS1) is said macro base station (BS1) or said micro base station (BS2).

13. A mobile station (MS, MS1) for operating in a heterogeneous radio access network (H-RAN) comprising a network node group (NNG) of a macro base station (BS1), at least one first mobile station (MS1) connected to said macro base station (BS1), a micro base station (BS2) located within a coverage area (CA-Bs1) of said macro base station (BS1) and at least one second mobile station (MS2) connected to said micro base station (BS2), said mobile station (MS, MS1) comprising:

   - means (MS-TRA) for transmitting from said mobile station (MS, MS1) of said network node group (NNG) to a base station (BS, BS1) of said network node group (NNG) second uplink radio frequency signals (U-RFS2) of a second frequency range (FR2), when a further base station (BS, BS2) of said network node group (NNG) provides a transmission of second downlink radio frequency signal (D-RFS2) of said second frequency range (FR2) to a further mobile station (MS, MS2) of said network node group (NNG), and for receiving (S2-MS) at said mobile station (MS, MS1) from said base station (BS, BS1) first downlink radio frequency signal (D-RFS1) of a first frequency range (FR1), when said further mobile station (MS, MS2) provides to said further base station (BS, BS2) a transmission of first uplink radio frequency signal (U-RFS1) of said first frequency range (FR1), and
- means (BB-PU-MS) for determining at least one transmission parameter (TP-MS) for a further transmission of said second uplink radio frequency signals (U-RFS2) based on an interference of said first uplink radio frequency signals (U-RFS1) for adapting said further transmission of said second uplink radio frequency signals (U-RFS2) and for reducing interference of said second uplink radio frequency signals (U-RFS2) at a location of said further mobile station (MS, MS2).

14. Mobile station (MS, MS1) according to claim 13, wherein said mobile station (MS, MS1) is said at least first mobile station (MS1) or said at least second mobile station (MS2).


**Amended claims in accordance with Rule 137(2) EPC.**

1. A method (MET-BS) for operating a base station (BS, BS1) in a heterogeneous radio access network (H-RAN) comprising a network node group (NG) of a macro base station (BS1), at least one first mobile station (MS1) connected to said macro base station (BS1), a micro base station (BS2) located within a coverage area (CA-BS1) of said macro base station (BS1) and at least one second mobile station (MS2) connected to said micro base station (BS2), said method (MET) comprising:

   - transmitting (S1-BS) from said base station (BS, BS1) of said network node group (NNG) to a mobile station (MS, MS1) of said network node group (NNG) first downlink radio frequency signals (D-RFS1) of a first frequency range (FR1), when a further mobile station (MS, MS2) of said network node group (NNG) provides a transmission of first uplink radio frequency signal (U-RFS1) of said first frequency range (FR1) to a further base station (BS, BS2) of said network node group (NNG), and receiving (S6-BS) at said base station (BS, BS1) from said mobile station (MS, MS1) second uplink radio frequency signal (U-RFS2) of a second frequency range (FR2), when said further base station (BS, BS2) provides to said further mobile station (MS, MS2) a transmission of second downlink radio frequency signal (D-RFS2) of said second frequency range (FR2), and
   - determining (S7-BS) at said base station (BS, BS1) at least one transmission parameter (TP-BS) for a further transmission of said first downlink radio frequency signals (D-RFS1) based on an interference of said second downlink radio frequency signals (D-RFS2) for adapting said further transmission of said first downlink radio frequency signals (D-RFS1) and for reducing interference of said first downlink radio frequency signals (D-RFS1) at a location of said further base station (BS, BS2).

2. Method (MET-BS) according to claim 1, wherein said determining (S7-BS) comprises:

   - determining (S7-1-BS) at least one interference parameter of said interference of said second downlink radio frequency signals (D-RFS2) received by said base station (BS, BS1), and
   - determining (S7-2-BS) said at least one transmission parameter (TP-BS) based on said at least one interference parameter.

3. Method (MET-BS) according to claim 2, wherein said at least one interference parameter is a second order statistics of said second downlink radio frequency signals (D-RFS2) or an interference channel matrix of said second downlink radio frequency signals (D-RFS2).

4. Method (MET-BS) according to claim 2 or claim 3, wherein said method (MET-BS) further comprises receiving (S6-BS) reference signals (D-RS) from said further base station (BS, BS2) and wherein said determining (S7-BS) comprises determining (S7-1-BS) said at least one interference parameter based on said received reference signals (D-RS).

5. Method (MET-BS) according to claim 4, wherein said reference signals (D-RS) are received within said first frequency range (FR1) and are dedicated for said base station (BS, BS1).

6. Method (MET-BS) according to claim 5, wherein said dedicated reference signals (D-RS) are received by a time interval in a range of 10 ms to 50 ms, in a range of 50 ms to 200 ms or in a range of 200 ms to 1 s.

7. Method (MET-BS) according to any of the preceding claims, wherein said determining (S7-BS) comprises at least one of the following:

- determining (S7-2-1-BS) at least one pre-coding parameter for said first downlink radio frequency signals (D-RFS1) for reducing an interference of said first downlink radio frequency signals (D-RFS1) at said location of said further base station (BS, BS1),
- determining (S7-2-2-BS) at least one transmission power parameter (TP-BS) for said first downlink radio frequency signal (D-RFS1) for reducing an interference of said first downlink radio frequency signal (D-RFS1) at said location of said further base station (BS, BS1).

8. Method (MET-BS) according to any of the preceding claims, wherein said method (MET-BS) further comprises performing (S8-BS) interference rejection combining and/or successive interference cancellation for suppressing interference of said second downlink radio frequency signal (D-RFS2).

9. Method (MET-BS) according to any of the preceding claims, wherein said base station (BS, BS1) is operated in a full-duplex operation mode.

10. A method (MET-MS) for operating a mobile station (MS, MS1) in a heterogeneous radio access network (H-RAN) comprising a network node group (NNG) of a macro base station (BS1), at least one first mobile station (MS1) connected to said macro base station (BS1), a micro base station (BS2) located within a coverage area (CA-BS1) of said macro base station (BS1) and at least one second mobile station (MS2) connected to said micro base station (BS2), said method (MET-MS) comprising:

- transmitting (S1-MS) from said mobile station (MS, MS1) of said network node group (NNG) to a base station (BS, BS1) of said network node group (NNG) second uplink radio frequency signals (U-RFS2) of a second frequency range (FR2), when a further base station (BS, BS2) of said network node group (NNG) provides a transmission of second downlink radio frequency signal (D-RFS2) of said second frequency range (FR2) to a further mobile station (MS, MS2) of said network node group (NNG), and receiving (S2-MS) at said mobile station (MS, MS1) from said base station (BS, BS1) first downlink radio frequency signal (D-RFS1) of a first frequency range (FR1), when said further mobile station (MS, MS2) provides to said further base station (BS, BS2) a transmission of first uplink radio frequency signal (U-RFS1) of said first frequency range (FR1), and
- determining (S7-MS) at said mobile station (MS, MS1) at least one transmission parameter (TP-MS) for a further transmission of said second uplink radio frequency signals (U-RFS2) based on an interference of said first uplink radio frequency signals (U-RFS1) for adapting said further transmission of said second uplink radio frequency signals (U-RFS2) and for reducing interference of said second uplink radio frequency signals (U-RFS2) at a location of said further mobile station (MS, MS2).

11. A base station (BS, BS1) for operating in a heterogeneous radio access network (H-RAN) comprising a network node group (NG) of a macro base station (BS1), at least one first mobile station (MS1) connected to said macro base station (BS1), a micro base station (BS2) located within a coverage area (CA-BS1) of said macro base station (BS1) and at least one second mobile station (MS2) connected to said micro base station (BS2), said base station (BS, BS1) comprising:

- means (BS-TRA) for transmitting from said base station (BS, BS1) of said network node group (NNG) to a mobile station (MS, MS1) of said network node group (NNG) first downlink radio frequency signals (D-RFS1) of a first frequency range (FR1), when a further mobile station (MS, MS2) of said network node group (NNG) provides a transmission of first uplink radio frequency signal (U-RFS1) of said first frequency range (FR1) to a further base station (BS, BS2) of said network node group (NNG), and for receiving (S6-BS) at said base station (BS, BS1) from said mobile station (MS, MS1) second uplink radio frequency signal (U-RFS2) of a second frequency range (FR2), when said further base station (BS, BS2) provides to said further mobile station (MS, MS2) a transmission of second downlink radio frequency signal (D-RFS2) of said second frequency range (FR2), and
- means (BB-PU-BS) for determining at least one transmission parameter (TP-BS) for a further transmission of said first downlink radio frequency signals (D-RFS1) based on an interference of said second downlink radio frequency signals (D-RFS2) for adapting said further transmission of said first downlink radio frequency signals (D-RFS1) and for reducing interference of said first downlink radio frequency signals (D-RFS1) at a location of said further base station (BS, BS2).

12. Base station (BS, BS1) according to claim 11, wherein said base station (BS, BS1) is said macro base station (BS1) or said micro base station (BS2).

13. A mobile station (MS, MS1) for operating in a heterogeneous radio access network (H-RAN) comprising a network node group (NNG) of a macro base station (BS1), at least one first mobile station (MS1) connected to said macro base station (BS1), a micro base station (BS2) located within a coverage area (CA-Bs1) of said macro base station (BS1) and at least one second mobile station (MS2) connected to said micro base station (BS2), said mobile station (MS, MS1) comprising:

- means (MS-TRA) for transmitting from said mobile station (MS, MS1) of said network node group (NNG) to a base station (BS, BS1) of said network node group (NNG) second uplink radio frequency signals (U-RFS2) of a second frequency range (FR2), when a further base station (BS, BS2) of said network node group (NNG) provides a transmission of second downlink radio frequency signal (D-RFS2) of said second frequency range (FR2) to a further mobile station (MS, MS2) of said network node group (NNG), and for receiving (S2-MS) at said mobile station (MS, MS1) from said base station (BS, BS1) first downlink radio frequency signal (D-RFS1) of a first frequency range (FR1), when said further mobile station (MS, MS2) provides to said further base station (BS, BS2) a transmission of first uplink radio frequency signal (U-RFS1) of said first frequency range (FR1), and
- means (BB-PU-MS) for determining at least one transmission parameter (TP-MS) for a further transmission of said second uplink radio frequency signals (U-RFS2) based on an interference of said first uplink radio frequency signals (U-RFS1) for adapting said further transmission of said second uplink radio frequency signals (U-RFS2) and for reducing interference of said second uplink radio frequency signals (U-RFS2) at a location of said further mobile station (MS, MS2).

FIG. 1

FIG. 2

START

MET-BS

S1-BS

Waiting for downlink
data to be transmitted

S5-BS

Waiting for reception
of uplink data

S2-BS

Receiving downlink
data to be transmitted

S6-BS

Receiving U-RFS2 and
D-RFS2 (and D-RS)

S3-BS

Transmitting D-RFS1

S8-BS

Performing IRC
and/or SIC

S7-BS

S7-1-BS

Determining interference
parameter of D-RFS2

S4-BS

Further
downlink
data?

Y

N

S9-BS

Extracting data
from U-RFS2

Determining transmission
parameter for D-RFS1

S7-2-BS

S7-2-2-BS

S7-2-1-BS

Determining
Pre-coding

Determining
Transmission
Power level

*FIG. 3*

FIG. 4

FIG. 5

*FIG. 6*

Europäisches
Patentamt

European
Patent Office

Office européen
des brevets

# EUROPEAN SEARCH REPORT

Application Number

EP 13 30 5905

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/039265 A1 (PATEL CHIRAG SURESHBHAI [US] ET AL) 16 February 2012 (2012-02-16)<br>* paragraph [0008] - paragraph [0012] *<br>* paragraph [0035] - paragraph [0036] *<br>* paragraph [0053] - paragraph [0061] *<br>----- | 1-14 | INV.<br>H04W52/24<br><br>ADD.<br>H04W16/02<br>H04W16/16 |
| A | US 2004/147243 A1 (MCKENNA DANIEL BERNARD [US]) 29 July 2004 (2004-07-29)<br>* abstract *<br>* paragraph [0006] *<br>* paragraph [0023] - paragraph [0032] *<br>* figures 2,3 *<br>----- | 1-14 | |

TECHNICAL FIELDS
SEARCHED      (IPC)

H04W

The present search report has been drawn up for all claims

| Place of search | Date of completion of the search | Examiner |
|---|---|---|
| Berlin | 23 January 2014 | Tous Fajardo, Juan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................

& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.** EP 13 30 5905

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2014

| Patent document cited in search report | Publication date | Patent family member(s) | Publication date |
|---|---|---|---|
| US 2012039265 A1 | 16-02-2012 | CN 102754493 A | 24-10-2012 |
| | | EP 2534895 A1 | 19-12-2012 |
| | | JP 2013520106 A | 30-05-2013 |
| | | KR 20120127724 A | 23-11-2012 |
| | | TW 201210378 A | 01-03-2012 |
| | | US 2012039265 A1 | 16-02-2012 |
| | | WO 2011100652 A1 | 18-08-2011 |
| US 2004147243 A1 | 29-07-2004 | CA 2552300 A1 | 04-08-2005 |
| | | US 2004147243 A1 | 29-07-2004 |
| | | WO 2005071983 A1 | 04-08-2005 |

EPO FORM P0459

For more details about this annex : see Official Journal of the European Patent Office, No. 12/82